# FASCICULE DE BREVET EUROPEEN

(11) **EP 1 986 136 B1**
(45) Date de publication et mention de la délivrance du brevet: **29.09.2010**
(21) Numéro de dépôt: 07106985.0
(22) Date de dépôt: 26.04.2007
(51) Int. Cl.: G06K 19/07

(54) **Circuit transpondeur à unité à double extracteur d'horloge**
Transponderschaltung mit doppelter Taktableitungseinheit
Transponder circuit with unit with double clock extractor

(43) Date de publication de la demande: 29.10.2008
(73) Titulaire: EM Microelectronic-Marin SA, 2074 Marin (CH)
(72) Inventeur: Stiglic, Maksimilijan, 2000 Maribor (SI); Randjelovic, Zoran, 2074 Marin (CH)
(74) Mandataire: Surmely, Gérard

(56) Documents cités:
- EP-A- 0 883 078
- EP-A- 0 936 574
- EP-A- 1 280 099
- WO-A-02/09028

## Description

L'invention concerne un circuit transpondeur à unité à double extracteur d'horloge. Le circuit transpondeur comprend une bobine antenne reliée à un bloc redresseur modulateur pour fournir une tension redressée d'alimentation du circuit sur la base d'un champ magnétique alternatif d'un signal radiofréquence capté. Une borne de la bobine antenne est reliée à l'unité à double extracteur d'horloge, qui fournit un signal d'horloge à une logique de contrôle. Cette logique de contrôle permet de fournir un signal de modulation au bloc redresseur modulateur pour la transmission d'un signal de données par la bobine antenne.

L'utilisation d'un double extracteur d'horloge dans un circuit transpondeur du type passif est connue notamment par le brevet EP 1 301 898. Le circuit transpondeur passif comprend une antenne pour capter un signal électromagnétique sinusoïdal de données ou de commandes provenant d'un lecteur à proximité. L'antenne est reliée au double extracteur d'horloge et à un redresseur qui produit une tension redressée stable d'alimentation aux parties du circuit transpondeur sur la base du signal électromagnétique capté. Le circuit transpondeur comprend encore un démodulateur, un circuit logique de commande et un modulateur. Le démodulateur est relié entre le double extracteur d'horloge et le circuit logique, alors que le modulateur est commandé par le circuit logique pour la transmission d'un signal de données par l'antenne.

Le premier extracteur d'horloge bas du circuit transpondeur du brevet EP 1 301 898, est réalisé à l'aide de deux inverseurs simples, dont la tension de seuil de commutation est voisine de 1 V. Un signal d'horloge, fourni au démodulateur, est produit par ce premier extracteur d'horloge uniquement si l'amplitude du signal capté par l'antenne est supérieure à 1 V, autrement le signal d'horloge s'interrompt. Le second extracteur d'horloge haut est réalisé à l'aide d'un transistor d'entrée PMOS, d'un inverseur polarisé commandé par le transistor d'entrée, d'un redresseur et de deux sources de courant. Un signal d'horloge, fourni au démodulateur, est produit par ce second extracteur d'horloge uniquement si l'amplitude du signal capté par l'antenne est supérieure à un seuil de commutation haut supérieur au seuil du premier extracteur d'horloge.

Lorsque le lecteur interrompt pendant une certaine durée l'émission du signal sinusoïdal, l'amplitude du signal reçu par l'antenne du circuit transpondeur diminue lentement. Le signal d'horloge du second extracteur d'horloge haut s'interrompt avant le signal d'horloge du premier extracteur d'horloge bas. De ce fait, le double extracteur d'horloge à deux niveaux de seuil différents permet uniquement de garantir une pause de durée très courte avant une nouvelle émission du signal sinusoïdal du lecteur. Ce circuit transpondeur à double extracteur d'horloge n'est par contre pas prévu pour détecter un arrêt du champ magnétique du signal produit par le lecteur avant une démodulation de données ou commandes à la suite de l'arrêt du champ. De plus, il n'est pas prévu une sélection du signal d'horloge de l'un ou de l'autre extracteur d'horloge pour le démodulateur dans le cas où le modulateur est en fonction, car lors de la réception du signal électromagnétique le modulateur ne doit pas être en fonction.

Dans la demande de brevet EP 1 280 099, il est décrit un circuit électronique susceptible de recevoir par une antenne des signaux à fréquence porteuse. Le circuit électronique comprend un premier extracteur d'horloge relié à l'antenne de réception, un second extracteur d'horloge défini comme un oscillateur à quartz, et un sélecteur de signaux d'horloge. Le sélecteur de signaux d'horloge fournit généralement les signaux d'horloge du premier extracteur d'horloge si les signaux captés ont une fréquence porteuse définie. Le circuit électronique est ainsi prévu pour gérer la puissance d'alimentation pour les différentes parties du circuit électronique. Cependant il n'est pas décrit une détection d'un arrêt d'un champ magnétique alternatif capté par l'antenne, ainsi que l'utilisation d'un double extracteur d'horloge relié directement à l'antenne.

Dans la demande de brevet EP 0 936 574, il est décrit une carte à puce susceptible de capter ou transmettre des signaux modulés par une antenne. Le circuit de la carte comprend un extracteur d'horloge sur la base des signaux captés à fréquence porteuse. Les signaux d'horloge fournis par l'extracteur d'horloge sont utilisés pour cadencer un démodulateur, ainsi qu'un modulateur de données à la même fréquence. Cependant il n'est pas prévu avec ce circuit de détecter un arrêt du champ magnétique alternatif capté par l'antenne et d'utiliser un double extracteur d'horloge.

Dans la demande de brevet EP 0 883 078, il est décrit un circuit électronique susceptible notamment de capter des signaux de données. L'énergie d'alimentation des parties électroniques du circuit est tirée des signaux captés par une antenne. Le circuit électronique comprend un générateur de signaux de commande du circuit électronique pour générer au moins un signal de commande en fonction du niveau des signaux captés par l'antenne, et un atténuateur relié à l'antenne pour fournir des signaux atténués sur la base des signaux captés. Il est prévu encore un circuit sélecteur qui reçoit les signaux atténués et au moins le signal de commande pour fournir un signal de sortie à un processeur de signaux d'horloge pour générer des signaux d'horloge. Cependant il n'est pas prévu avec ce circuit de détecter un arrêt du champ magnétique alternatif capté par l'antenne et d'utiliser un double extracteur d'horloge.

Pour diverses applications à faible puissance, un circuit transpondeur passif peut comprendre un unique extracteur d'horloge sensible, qui nécessite une sensibilité voisine de 100 mV. Cet extracteur d'horloge sensible peut être utilisé même si l'amplitude du signal capté par la bobine antenne du circuit transpondeur est en dessous de 150 mV crête, lorsqu'un commutateur du modulateur est dans un état enclenché ou conducteur ON.

Pour débuter une démodulation de données reçues dans le champ magnétique alternatif du signal capté par la bobine antenne, il doit en général être détecté tout d'abord un arrêt du champ du signal capté, qui est généré par un lecteur voisin. Cependant, un circuit transpondeur muni d'un extracteur d'horloge sensible n'est en général pas en mesure de détecter cet arrêt de champ lorsque le commutateur du modulateur est dans un état déclenché OFF. Dans cet état déclenché OFF, avec un premier arrêt de champ magnétique alternatif du lecteur, un flottement en tension sur la bobine est constaté sans que cette tension arrive au potentiel de masse. Ceci est dû au fait que la ou les résistances du modulateur ne sont pas placées en parallèle avec l'antenne du circuit résonnant, comme dans le cas où le commutateur est dans un état enclenché ON. Il y a donc une fuite de tension vers l'arrière vers la bobine antenne, car le redresseur ne fonctionne pas en dessous d'un seuil de commutation correspondant à celui d'un inverseur, par exemple de l'ordre de 0.6 V.

Si la tension sur la bobine se stabilise par exemple vers 300 mV, tout va dépendre du seuil de l'extracteur d'horloge pour la détection d'un arrêt du champ du signal capté. De ce fait comme l'extracteur d'horloge est sensible à partir de 100 mV, il ne peut en principe pas y avoir de détection de l'arrêt du champ magnétique du signal capté, si la tension sur la bobine se stabilise vers 300 mV.

L'invention a donc pour but principal de fournir un circuit transpondeur à double extracteur d'horloge susceptible de détecter un arrêt de champ magnétique alternatif d'un signal capté par la bobine antenne indépendamment de l'état d'un modulateur en fonction afin de pallier les inconvénients cités ci-devant.

A cet effet, l'invention concerne un circuit transpondeur à unité à double extracteur d'horloge cité ci-devant, qui comprend les caractéristiques mentionnées dans la revendication 1.

Des formes d'exécution avantageuses du circuit transpondeur à unité à double extracteur d'horloge sont définies dans les revendications dépendantes 2 à 9.

Un avantage du circuit transpondeur réside dans le fait que le premier extracteur d'horloge sensible de l'unité à double extracteur d'horloge est sélectionné lorsqu'un signal de modulation pour le modulateur est dans un premier état, alors que le second extracteur d'horloge inverseur est sélectionné, lorsque le signal de modulation pour le modulateur est dans un second état. Le premier état haut du signal de commande permet d'enclencher un commutateur du modulateur pour le placer dans un état conducteur ON, alors que le second état bas du signal de commande permet de placer le commutateur dans un état non conducteur OFF. Ainsi, le modulateur peut rester ainsi toujours en fonction à la réception d'un champ magnétique alternatif d'un signal radiofréquence capté par la bobine antenne.

Avantageusement, le premier extracteur d'horloge sensible est réalisé pour avoir un seuil de commutation inférieur au seuil de commutation du bloc redresseur modulateur pour redresser la tension alternative de la bobine. Le seuil du premier extracteur d'horloge peut être de l'ordre de 100 mV. Le second extracteur d'horloge inverseur est réalisé par contre pour avoir un seuil de commutation supérieur ou égal au seuil du bloc redresseur modulateur, par exemple de l'ordre de 0.6 V.

Avantageusement, l'unité à double extracteur d'horloge comprend une bascule bistable commandée en entrée par le signal de modulation et un signal combinant le signal de modulation avec le signal d'horloge du second extracteur d'horloge, et un multiplexeur commandé par le signal de sélection fourni par la bascule bistable. Le multiplexeur reçoit en entrée les premier et second signaux d'horloge des premier et second extracteurs d'horloge et fournit un signal d'horloge de sortie fonction de l'état du signal de sélection. Grâce à un agencement de portes logiques, de la bascule et du multiplexeur, aucune perte d'impulsions du signal d'horloge, qui est fourni en sortie de l'unité à double extracteur d'horloge, n'apparaît notamment lors du passage de l'état haut à l'état bas du signal de modulation. Le signal d'horloge du premier extracteur d'horloge reste donc sélectionné en sortie de l'unité à double extracteur d'horloge même si le signal de modulation passe à l'état bas, et jusqu'à ce que le niveau de tension à l'entrée de l'unité soit supérieur ou égal au seuil du second extracteur d'horloge inverseur. Le passage du signal de modulation de l'état bas à l'état haut ne cause par contre aucune perte d'impulsions du signal d'horloge en sortie de l'unité à double extracteur.

Avantageusement, une bascule monostable est disposée entre l'unité à double extracteur d'horloge et la logique de contrôle pour être en mesure de fournir un signal de détection de l'arrêt du champ sur un flanc descendant provenant de l'unité à double extracteur d'horloge après un laps de temps déterminé. Cette bascule monostable est en mesure de détecter l'arrêt du champ indépendamment de l'état du signal de modulation du modulateur en fonction.

Les buts, avantages et caractéristiques du circuit transpondeur à unité à double extracteur d'horloge apparaîtront mieux dans la description suivante d'au moins une forme d'exécution non limitative illustrée par les dessins sur lesquels :
la figure 1 représente un schéma bloc simplifié d'un circuit transpondeur basse puissance selon l'invention,
la figure 2 représente le bloc redresseur modulateur relié à la bobine antenne du circuit transpondeur selon l'invention,
la figure 3 représente de manière simplifiée les différents composants de l'unité à double extracteur d'horloge du circuit transpondeur selon l'invention, et
la figure 4 représente un diagramme temporel de différents signaux de l'unité à double extracteur d'horloge en fonction de l'état du commutateur du modulateur du circuit transpondeur selon l'invention.

Dans la description suivante, toutes les parties du circuit transpondeur qui sont bien connues d'un homme du métier dans ce domaine technique ne sont relatées que de manière simplifiée. De préférence, ce circuit transpondeur est de type passif et configuré pour une réception et une transmission de signaux radiofréquences à basse fréquence dans une marge de 100 à 150 kHz.

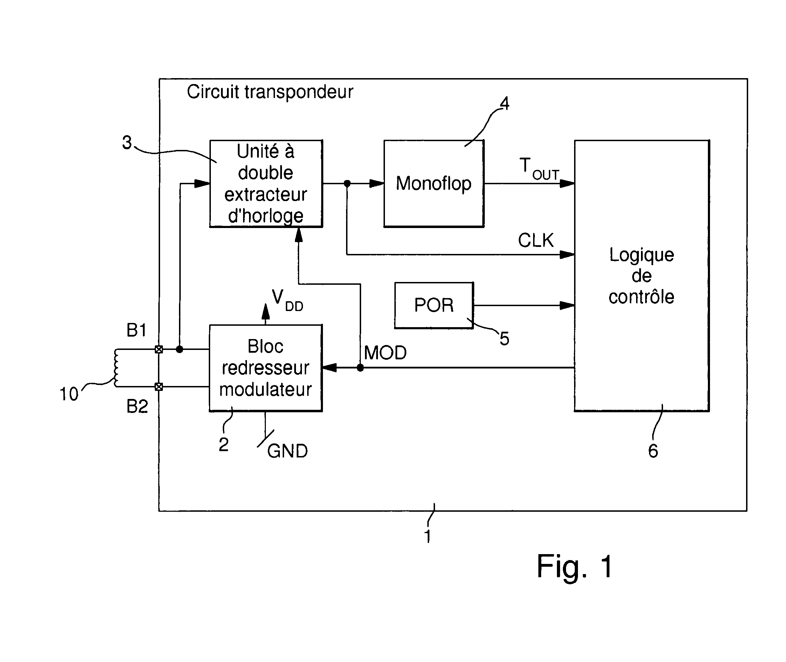

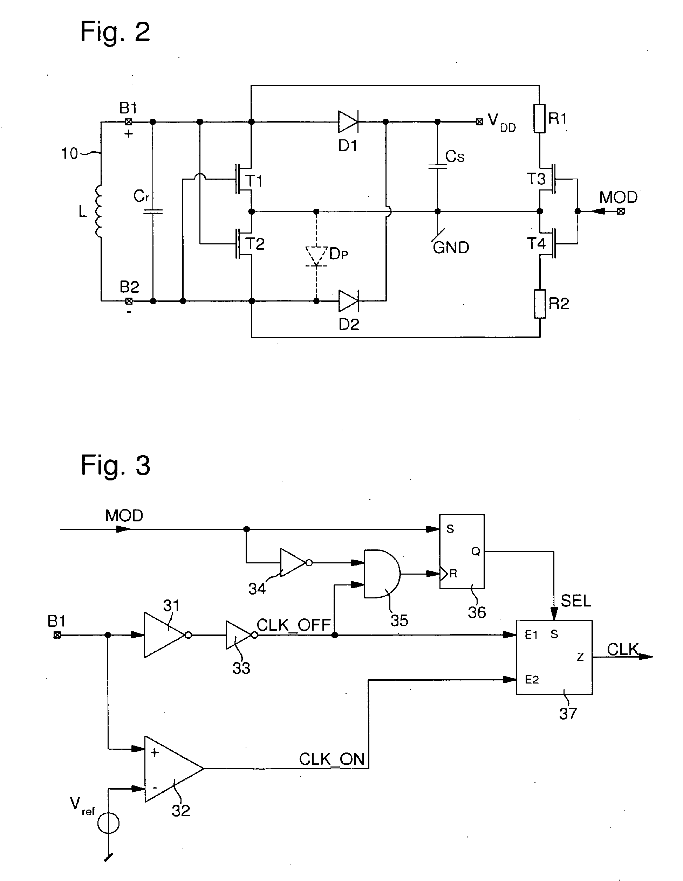

La figure 1 montre de manière schématique les composants essentiels d'un circuit transpondeur basse puissance de type passif 1 selon l'invention pouvant fonctionner par exemple à une fréquence de l'ordre de 125 kHz. Ce circuit transpondeur 1 comprend tout d'abord une bobine antenne 10 reliée par deux bornes B1, B2 à un bloc redresseur modulateur 2, expliqué ci-après en référence à la figure 2. Ce bloc redresseur 2 fournit une tension redressée d'alimentation V_{DD} pour alimenter les composants du circuit transpondeur sur la base d'un champ magnétique alternatif d'amplitude suffisante d'un signal radiofréquence capté par la bobine antenne.

Le signal radiofréquence, qui est capté par la bobine antenne, peut provenir d'un lecteur situé dans un voisinage rapproché du circuit transpondeur 1 par exemple dans une zone de quelques mètres autour du circuit transpondeur. Généralement, le signal radiofréquence transmis par le lecteur est tout d'abord un signal d'interrogation de manière à détecter tout circuit transpondeur à proximité susceptible de répondre au signal d'interrogation. Une fois qu'une communication est établie entre le lecteur et le circuit transpondeur, le lecteur peut transmettre principalement par modulation d'amplitude des données et/ou des commandes dans le signal radiofréquence à fréquence porteuse déterminée.

Le circuit transpondeur 1 comprend également une unité à double extracteur d'horloge 3, qui sera expliquée plus en détail ci-dessous en référence à la figure 3, reliée à au moins une borne B1 de la bobine antenne 10, une logique de commande 6 cadencée par un signal d'horloge CLK fourni par l'unité à double extracteur d'horloge, et un bloc de contrôle de mise sous tension POR 5 pour assurer une régulation de tension et une initialisation adéquate de la logique de contrôle 6. La logique de contrôle 6 fournit un signal de modulation MOD au bloc redresseur modulateur 2 pour la transmission d'un signal radiofréquence de données par la bobine antenne, ainsi qu'à l'unité à double extracteur d'horloge pour la sélection de l'un ou l'autre extracteur d'horloge. Le signal d'horloge d'un extracteur d'horloge sensible de l'unité à double extracteur d'horloge 3 est sélectionné par le signal de modulation, quand le signal de modulation MOD est dans un premier état haut défini ON. Le signal d'horloge d'un second extracteur d'horloge inverseur est sélectionné, quand le signal de modulation MOD est dans un second état bas défini OFF.

Une bascule monostable 4, appelée monoflop en terminologie anglaise, est également prévue pour recevoir le signal d'horloge CLK de l'unité à double extracteur d'horloge 3 et fournir un signal d'interruption T_{OUT} du signal radiofréquence à la logique de contrôle suite à un arrêt du signal d'horloge. Le signal d'interruption T_{OUT} permet à la logique de contrôle de connaître le moment du début de la réception de données et/ou de commandes transmises dans le signal radiofréquence suite à l'arrêt de champ. Le temps de réaction de cette bascule monostable est plus grand que le temps de transition d'amplitude de la tension alternative au niveau de la bobine antenne dû au changement d'état du signal de modulation MOD. De cette manière, le signal d'interruption T_{OUT} est produit pour informer la logique de contrôle 6 uniquement lorsque le signal d'horloge s'est arrêté pendant au moins le temps de réaction de cette bascule monostable 4.

Le circuit transpondeur basse puissance de type passif 1 peut être réalisé par exemple avec une structure similaire à un circuit transpondeur commercialisé par la société EM Microelectronic-Marin SA en Suisse, sous la référence EM 4205 ou EM 4305 "512 bit READ/WRITE CONTACTLESS IDENTIFICATION DEVICE". Il comprend donc également un démodulateur et une mémoire notamment du type EEPROM, qui ne sont pas représentés à la figure 1.

La figure 2 représente les différents éléments du bloc redresseur modulateur 2. Un condensateur Cr est relié en parallèle aux deux bornes B1 et B2 de la bobine antenne 10 afin de former avec la bobine un circuit résonnant. L'inductance L de la bobine antenne 10 et la valeur capacitive du condensateur Cr sont choisies en fonction de la fréquence porteuse du signal radiofréquence à capter.

La partie redresseur pour convertir la tension alternative du circuit résonnant, induite par le champ magnétique alternatif d'un signal radiofréquence capté, en une tension redressée d'alimentation V_{DD}, est bien connue d'un homme du métier dans ce domaine technique. Elle est composée d'un redresseur à double alternance.

Cette partie redresseur comprend donc un premier transistor NMOS T1 et un second transistor NMOS T2, qui sont reliés en série entre les deux bornes B1 et B2 du circuit résonnant, une diode D1, une diode D2 et un condensateur Cs pour stocker la tension redressée V_{DD}. La borne de drain du premier transistor T1 est reliée à la borne B1 du circuit résonnant. La borne de grille du transistor T1 est reliée à la borne B2 du circuit résonnant, et la borne de source du transistor T1 est reliée à la borne de drain du transistor T2. La borne de grille du transistor T2 est reliée à la borne B1 du circuit résonnant, et la borne de source du transistor T2 est reliée à la borne B2 du circuit résonnant. La borne de masse GND du condensateur Cs est reliée au noeud de connexion entre les premier et second transistors T1 et T2. L'anode de la diode D1 est reliée à la borne B1. L'anode de la diode D2 est reliée à la borne B2. Finalement, les cathodes des diodes D1 et D2 sont reliées à la borne du condensateur Cs, qui fournit la tension redressée V_{DD}. Comme le circuit transpondeur est réalisé, excepté la bobine antenne, dans un circuit intégré par exemple dans une technologie CMOS, il doit être tenu compte en général de l'effet également de diodes parasites Dp représentées en traits interrompus à la figure 2 en parallèle du second transistor T2.

Pour obtenir une tension redressée V_{DD} aux bornes du condensateur Cs, il est nécessaire que l'amplitude de la tension alternative du circuit résonnant soit supérieure au seuil du redresseur, qui correspond au seuil d'un inverseur traditionnel, c'est-à-dire au seuil de conduction de chaque transistor NMOS. Cette tension de seuil peut être de l'ordre de 0.6 V.

Le bloc redresseur modulateur comprend également une partie modulateur, qui comprend au moins un commutateur commandé par un signal de modulation MOD et une résistance à mettre en parallèle au circuit résonnant. Cette partie modulateur comprend de préférence deux commutateurs, qui sont constitués par deux transistors NMOS T3 et T4, et deux résistances R1 et R2, qui peuvent être de même valeur. La borne de source du transistor T3 et la borne de drain du transistor T4 sont reliées à la borne de masse GND. La résistance R1 est reliée entre la borne B1 du circuit résonnant et la borne de drain du transistor T3, alors que la résistance R2 est reliée entre la borne B2 du circuit résonnant et la borne de source du transistor T4. La grille des deux transistors T3 et T4 est commandée par le signal de modulation MOD.

Lorsque le signal de modulation MOD est à l'état haut défini ON à une valeur de tension supérieure à la tension de seuil de chaque transistor T3 et T4 par rapport à la masse, chaque transistor T3 et T4 devient conducteur. Ainsi les deux résistances R1 et R2 sont mises en parallèle au circuit résonnant. Dans cet état, l'amplitude de la tension alternative du circuit résonnant est fortement diminuée par la mise en parallèle des résistances. Selon la valeur résistive choisie des résistances, l'amplitude peut diminuer par exemple jusqu'à une valeur de tension alternative de l'ordre de 150 mV, bien en dessous du seuil du redresseur. Par contre, lorsque le signal de modulation MOD est à l'état bas défini OFF à une valeur de tension inférieure à la tension seuil de chaque transistor T3 et T4, les deux transistors sont dans un état non conducteur. L'amplitude de la tension alternative du circuit résonnant reste au plus haut niveau fonction de l'amplitude du signal radiofréquence capté.

Avec un agencement dans le temps d'impulsions du signal de modulation MOD définissant un état haut ON, alors que l'intervalle entre chaque impulsion définit un état bas OFF, il est possible de transmettre des données par la bobine antenne par modulation d'amplitude. Le modulateur est donc toujours en fonction à la réception continuelle du signal radiofréquence à fréquence porteuse déterminée provenant d'un lecteur à proximité. Cette modulation d'amplitude pour le circuit transpondeur de la présente invention peut être une modulation profonde d'amplitude, appelée "deep modulation" en terminologie anglaise.

Avec une faible modulation d'amplitude du modulateur du circuit transpondeur, appelée "shallow modulation" en terminologie anglaise, l'amplitude de la tension alternative du circuit résonnant ne descend en général pas en dessous d'un seuil d'un inverseur. Dans un tel cas, un circuit transpondeur traditionnel, qui utilise un simple extracteur d'horloge inverseur, pourrait être utilisé.

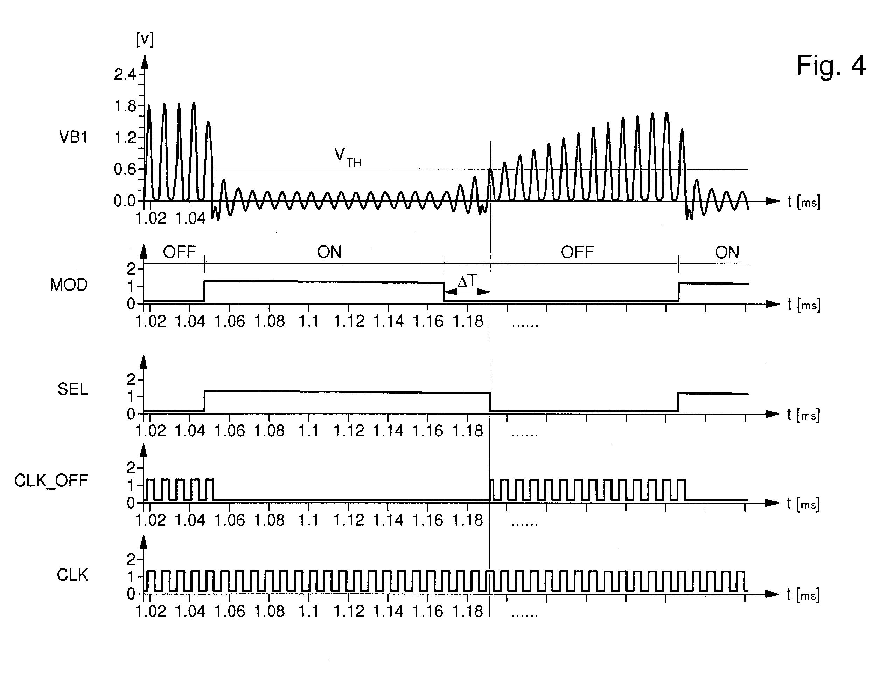

Comme on pourra le remarquer en référence aux diagrammes présentés à la figure 4, le temps de transition d'un niveau bas à un niveau haut de l'amplitude de la tension alternative du circuit résonnant est plus long, lors du passage de l'état ON à l'état OFF du signal de modulation, que le temps de transition du niveau haut au niveau bas de l'amplitude de la tension alternative du circuit résonnant, lors du passage de l'état OFF à l'état ON du signal de modulation. L'unité à double extracteur décrite ci-après en référence à la figure 3 est configurée pour tenir compte de ce temps de transition de manière à rester toujours synchrone sans perte d'impulsions du signal d'horloge fourni en sortie de l'unité.

L'unité à double extracteur d'horloge de la figure 3 comprend un premier extracteur d'horloge sensible 32, un second extracteur d'horloge inverseur 31, 33, une bascule bistable RS 36, des portes logiques 34, 35 et un multiplexeur 37 pour fournir un signal d'horloge CLK d'un des extracteurs d'horloge sélectionné en fonction de l'état du signal de modulation MOD.

Le premier extracteur d'horloge sensible est composé d'un comparateur de tension 32. Ce comparateur de tension 32 reçoit à une entrée positive la tension alternative provenant de la bobine antenne par la borne B1, et à une entrée négative une tension de référence basse, par exemple de l'ordre de 100 mV pour définir le seuil bas de l'extracteur d'horloge sensible. Un signal d'horloge CLK_ON, qui est composé d'une série d'impulsions à fréquence identique à la fréquence de la tension alternative de la bobine antenne, est fourni en sortie du comparateur de tension 32. Bien entendu, il est nécessaire que la tension crête du signal de tension alternative de la bobine antenne soit au-dessus du seuil bas afin de produire la série d'impulsions du signal d'horloge CLK_ON.

Le second extracteur d'horloge inverseur est composé essentiellement d'un premier inverseur 31, qui peut être suivi par un second inverseur 33 afin de fournir en sortie un signal d'horloge CLK_OFF. Ce signal d'horloge CLK_OFF est composé d'une série d'impulsions à fréquence identique à la fréquence de la tension alternative de la bobine antenne reçue par la borne B1. La série d'impulsions du signal d'horloge est produite pour autant que la tension crête du signal de tension alternative de la bobine antenne soit au-dessus d'un seuil haut de l'inverseur V_{TH} qui peut être de l'ordre de 0.6 V. Ce seuil haut peut correspondre à celui d'un transistor HVNMOS. Le premier inverseur 31 peut comprendre traditionnellement, connectés en série entre la tension redressée d'alimentation et la masse, un transistor PMOS et un transistor NMOS. Le transistor PMOS peut être à petit canal, alors que le transistor NMOS peut être à grand canal pour réaliser un inverseur déséquilibré. Les grilles reliées de ces deux transistors sont commandées par la tension alternative de la bobine antenne, alors que le noeud de connexion des deux transistors fournit un signal d'horloge, qui est inversé par le second inverseur 33 afin de fournir le signal d'horloge CLK_OFF.

La bascule bistable RS 36 de l'unité à double extracteur d'horloge, est commandée à une entrée S (Select) par le signal de modulation MOD et à une entrée R (Reset) de mise à zéro par un signal combinant le signal de modulation MOD avec le signal d'horloge CLK_OFF du second extracteur d'horloge. Cette combinaison des signaux est obtenue par une porte logique AND 35, qui reçoit en entrée le signal de modulation inversé par un inverseur 34 et le signal d'horloge CLK_OFF, afin de fournir le signal combiné à l'entrée R (Reset) de la bascule RS. De cette manière, cela évite d'avoir en même temps aux entrées S et R de la bascule un état haut défini comme un "1" binaire, qui peut générer un état non désiré en sortie Q de la bascule.

Le signal de sélection SEL en sortie de la bascule bistable RS 36 est fourni au multiplexeur 37, qui reçoit en entrée les deux signaux d'horloge CLK_ON et CLK_OFF des deux extracteurs d'horloge. En fonction de l'état du signal de sélection SEL, le signal d'horloge d'un seul des extracteurs d'horloge est fourni en sortie du multiplexeur. Le signal d'horloge CLK en sortie du multiplexeur 37 permet de cadencer la logique de contrôle du circuit transpondeur et d'être fourni à la bascule monostable pour la détection d'un arrêt du champ magnétique capté par la bobine antenne.

Grâce à l'agencement des portes logiques 34, 35 et de la bascule bistable 36, aucune perte d'impulsions du signal d'horloge CLK de sortie n'est constaté notamment lors du passage de l'état haut ON à l'état bas OFF du signal de modulation MOD. Une bonne synchronisation du signal d'horloge est maintenue indépendamment de l'état du signal de modulation MOD. Le signal d'horloge CLK_ON du premier extracteur d'horloge reste donc sélectionné en sortie du multiplexeur même si le signal de modulation MOD passe à l'état bas, et ceci jusqu'à ce que le niveau de tension à l'entrée du second extracteur d'horloge soit supérieur ou égal au seuil inverseur haut du second extracteur d'horloge inverseur. Le passage du signal de modulation de l'état bas à l'état haut ne cause par contre aucune perte d'impulsions du signal d'horloge en sortie de l'unité à double extracteur d'horloge.

Lorsque le second extracteur d'horloge est sélectionné pour fournir le signal d'horloge CLK, une détection de l'arrêt du champ magnétique est effectuée plus rapidement que lorsque le premier extracteur d'horloge est sélectionné.

De manière à mieux représenter la sélection de l'un ou de l'autre extracteur d'horloge sans perte d'impulsions du signal d'horloge CLK, on peut se référer à la figure 4, qui représente différents signaux en tension dans le temps relevés dans l'unité à double extracteur d'horloge.

Sur cette figure 4, il est représenté la tension alternative VB1 à la borne B1 de la bobine antenne de fréquence voisine de 125 kHz. Cette tension alternative présente à la borne B1 a une amplitude maximale montrée proche de 1.8 V, quand le signal de modulation MOD est à l'état bas défini par OFF. La forme de cette tension alternative à amplitude maximale présente à la borne B1 de la bobine antenne n'est que la demi alternance de la tension alternative totale présente aux deux bornes de la bobine antenne. Ceci est dû au fonctionnement du bloc redresseur modulateur, qui permet de redresser la tension alternative aux bornes de la bobine antenne étant donné que l'amplitude de cette tension se trouve au-dessus du seuil du redresseur, qui correspond au seuil inverseur V_{TH}.

L'amplitude de cette tension alternative VB1 est par contre fortement et rapidement diminuée vers une valeur par exemple proche de 150 mV, lorsque le signal de modulation MOD passe de l'état bas défini par OFF à l'état haut défini par ON. Dans ce cas, le signal de tension alternative à la borne B1 de la bobine antenne est de forme sinusoïdale centrée par rapport à la masse. Par contre, lors du passage de l'état ON à l'état OFF du signal de modulation MOD, il faut plusieurs cycles à la tension alternative aux bornes de la bobine antenne pour revenir à une amplitude maximale comme on peut le voir sur le graphe de la tension VB1. Ceci est dû principalement au facteur de qualité de la bobine antenne du circuit transpondeur.

Même si le signal de modulation MOD a passé d'un état ON à un état OFF, il est nécessaire d'attendre que le niveau de l'amplitude de la tension alternative atteigne le seuil inverseur V_{TH} du second extracteur d'horloge. Dès que l'amplitude de la tension alternative est suffisante, le second extracteur d'horloge inverseur est en mesure de fournir à nouveau un signal d'horloge CLK_OFF. Un laps de temps ΔT de l'ordre de 0.02 ms doit donc être observé avant que le signal d'horloge CLK_OFF soit fourni en sortie du multiplexeur de l'unité à double extracteur lorsque le signal de sélection SEL passe de l'état haut à l'état bas. Pendant ce laps de temps ΔT, le premier extracteur d'horloge toujours en fonction, fournit le signal d'horloge en sortie de l'unité à double extracteur d'horloge comme montré par exemple par le signal d'horloge CLK sur la figure 4. Le passage de l'état bas à l'état haut du signal de sélection SEL se fait par contre très rapidement en même temps que le passage de l'état bas à l'état haut du signal de modulation MOD.

Grâce à l'agencement de l'unité à double extracteur d'horloge selon l'invention, aucune perte d'impulsions du signal d'horloge CLK à la sortie de l'unité à double extracteur d'horloge n'est donc constatée quelque soit l'état du signal de modulation pour le modulateur en fonction. Ceci permet au circuit transpondeur de la présente invention de rester toujours synchrone même avec le modulateur en fonction, de manière à pouvoir détecter un arrêt du champ magnétique capté par la bobine antenne lorsque le signal de modulation est à l'état haut ou à l'état bas.

A partir de la description qui vient d'être faite, de multiples variantes de réalisation du circuit transpondeur à double extracteur d'horloge peuvent être conçues par l'homme du métier sans sortir du cadre de l'invention définie par les revendications. Il peut être prévu que le circuit transpondeur soit configurable pour être du type actif au lieu de passif. Il est à noter que le circuit transpondeur peut être conçu pour capter également des signaux à fréquence HF, VHF ou UHF.

## Revendications

1. Circuit transpondeur (1) à unité à double extracteur d'horloge (3),
le circuit transpondeur comprenant
une bobine antenne (10) reliée à un bloc redresseur modulateur (2) pour fournir une tension redressée d'alimentation (V_{DD}) sur la base d'un signal radiofréquence capté par la bobine antenne à fréquence déterminée et à amplitude suffisante,
une borne (B1) de la bobine antenne étant reliée à l'unité à double extracteur d'horloge (3),
et une logique de contrôle (6) recevant un signal d'horloge (CLK) de l'unité à double extracteur d'horloge et fournissant un signal de modulation (MOD) au bloc redresseur modulateur,
**caractérisé en ce que**
l'unité à double extracteur d'horloge comprend un premier extracteur d'horloge sensible (32) ayant un seuil de commutation inférieur au seuil de commutation du bloc redresseur et un second extracteur d'horloge inverseur (31, 33),
et **en ce que** le signal de modulation (MOD) est fourni à l'unité à double extracteur d'horloge pour sélectionner le signal d'horloge (CLK_ON) produit par le premier extracteur d'horloge, quand le signal de modulation est dans un premier état haut ou bas, ou le signal d'horloge (CLK_OFF) produit par le second extracteur d'horloge, quand le signal de modulation est dans un second état opposé au premier état.

2. Circuit transpondeur (1) selon la revendication 1, **caractérisé en ce que** le premier extracteur d'horloge sensible (32) possède un seuil de commutation bas en dessous d'un seuil de commutation du bloc redresseur modulateur (2) pour redresser la tension alternative de la bobine antenne (10), et **en ce que** le second extracteur d'horloge inverseur (31, 33) possède un seuil de commutation haut égal ou au-dessus du seuil du bloc redresseur modulateur.

3. Circuit transpondeur (1) selon la revendication 2, **caractérisé en ce que** le premier extracteur d'horloge sensible comprend un comparateur (32) dont une entrée positive est reliée à une des bornes (B1) de la bobine antenne (10), et une entrée négative est polarisée par une tension de référence (Vref) de valeur inférieure à la tension de seuil du bloc redresseur modulateur, par exemple de l'ordre de 100 mV, la sortie du comparateur fournissant le signal d'horloge (CLK_ON) du premier extracteur d'horloge, et **en ce que** le second extracteur d'horloge inverseur comprend au moins un premier inverseur (31) relié en entrée à la même borne (B1) de la bobine antenne que le premier extracteur d'horloge.

4. Circuit transpondeur (1) selon la revendication 3, **caractérisé en ce que** le second extracteur d'horloge inverseur comprend un second inverseur (33) relié en sortie du premier inverseur (31), afin de fournir en sortie le signal d'horloge du second extracteur d'horloge (CLK_OFF).

5. Circuit transpondeur (1) selon l'une des revendications précédentes, **caractérisé en ce qu'**il comprend une bascule monostable (4) recevant un signal d'horloge (CLK) de l'unité à double extracteur d'horloge (3) et fournissant un signal d'interruption (Tout) du signal radiofréquence à la logique de contrôle (6) suite à un arrêt du signal d'horloge (CLK).

6. Circuit transpondeur (1) selon l'une des revendications précédentes, **caractérisé en ce que** l'unité à double extracteur d'horloge (3) comprend un multiplexeur (37) pour recevoir en entrée le signal d'horloge (CLK_ON) du premier extracteur d'horloge sensible (32) et le signal d'horloge (CLK_OFF) du second extracteur d'horloge inverseur (31, 33), et pour fournir en sortie un des signaux d'horloge (CLK) des premier et second extracteurs d'horloge, qui est sélectionné par un signal de sélection (SEL) dépendant de l'état du signal de modulation (MOD).

7. Circuit transpondeur (1) selon la revendication 6, **caractérisé en ce que** l'unité à double extracteur d'horloge comprend une bascule bistable du type RS (36), dont une première entrée (S) reçoit le signal de modulation (MOD) et une seconde entrée (R) reçoit un signal combiné fourni par une porte de type AND, qui reçoit en entrée le signal d'horloge (CLK_OFF) du second extracteur d'horloge inverseur et un signal inversé du signal de modulation, la bascule bistable fournissant en sortie le signal de sélection (SEL) pour commander le multiplexeur, et **en ce que** le multiplexeur fournit en sortie un signal d'horloge (CLK) du second extracteur d'horloge, lorsque le signal de modulation (MOD) est dans un second état bas (OFF) avec un signal d'horloge produit par le second extracteur d'horloge en fonction, le multiplexeur fournissant en sortie le signal d'horloge (CLK_ON) du premier extracteur d'horloge, lorsque le signal de modulation est dans un premier état haut (ON).

8. Circuit transpondeur (1) selon l'une des revendications précédentes, **caractérisé en ce qu'**une partie modulateur du bloc redresseur modulateur (2) comprend au moins un commutateur (T3, T4) relié en série à au moins une résistance (R1, R2), ledit commutateur avec la résistance étant placés en parallèle de la bobine antenne, et **en ce que** le commutateur est commandé par le signal de modulation (MOD) pour être conducteur et placer la résistance directement en parallèle de la bobine antenne pour diminuer l'amplitude de la tension alternative du signal capté par la bobine antenne, lorsque le signal de modulation est dans un premier état haut, et pour être non conducteur, lorsque le signal de modulation est dans un second état bas.

9. Circuit transpondeur (1) selon la revendication 8, **caractérisé en ce que** la partie modulateur comprend deux commutateurs (T3, T4) et deux résistances (R1, R2), **en ce qu'**un premier commutateur, qui est un transistor MOS (T3), est relié en série avec une première résistance (R1) pour être disposés entre une masse définie en sortie du bloc redresseur modulateur (2) et une première borne (B1) de la bobine antenne (10), **en ce qu'**un second commutateur, qui est un transistor MOS (T4), est relié en série avec une seconde résistance (R2) pour être disposés entre la masse et une seconde borne (B2) de la bobine antenne, et **en ce qu'**une grille de chaque transistor MOS est commandé directement par le signal de modulation (MOD).

## Claims

1. Transponder circuit (1) with double clock extractor unit (3),
said transponder circuit comprising:
an antenna coil (10) connected to a modulator rectifier block (2) to supply a rectified supply voltage (V_{DD}) on the basis of a radio-frequency signal picked up by the antenna coil at determined frequency and sufficient amplitude,
wherein a terminal (B1) of the antenna coil is connected to the double clock extractor unit (3),
and a control logic (6) receiving a clock signal (CLK) of the double clock extractor unit and supplying a modulation signal (MOD) to the modulator rectifier block,
**characterised in that**
the double clock extractor unit comprises a first sensitive clock extractor (32) having a switching threshold lower than the switching threshold of the rectifier block and a second inverter clock extractor (31, 33), and
**in that** the modulation signal (MOD) is supplied to the double clock extractor unit to select the clock signal (CLK_ON) produced by the first clock extractor when the modulation signal is in a first high or low status, or the clock signal (CLK_OFF) produced by the second clock extractor when the modulation signal is in a second status opposed to the first status.

2. Transponder circuit (1) according to claim 1, **characterised in that** the first sensitive clock extractor (32) has a low switching threshold below a switching threshold of the modulator rectifier block (2) to rectify the alternating voltage of the antenna coil (10), and **in that** the second inverter clock extractor (31, 33) has a high switching threshold equal to or higher than the threshold of the modulator rectifier block.

3. Transponder circuit (1) according to claim 2, **characterised in that** the first sensitive clock extractor comprises a comparator (32), of which a positive input is connected across one of the terminals (B1) of the antenna coil (10) and a negative input is polarised by a reference voltage (Vref) with a value below the threshold voltage of the modulator rectifier block in the order of 100 mV, for example, wherein the output of the comparator supplies the clock signal (CLK_ON) of the first clock extractor, and **in that** the second inverter clock extractor comprises at least a first inverter (31) connected as input across the same terminal (B1) of the antenna coil as the first clock extractor.

4. Transponder circuit (1) according to claim 3, **characterised in that** the second inverter clock extractor comprises a second inverter (33) connected as output of the first inverter (31) in order to supply as output the clock signal of the second clock extractor (CLK_OFF).

5. Transponder circuit (1) according to one of the preceding claims, **characterised in that** it comprises a monoflop (4) receiving a clock signal (CLK) of the double clock extractor unit (3) and supplying an interruption signal (Tout) of the radio-frequency signal to the control logic (6) subsequent to an interruption of the clock signal (CLK).

6. Transponder circuit (1) according to one of the preceding claims, **characterised in that** the double clock extractor unit (3) comprises a multiplexer (37) to receive as input the clock signal (CLK_ON) of the first sensitive clock extractor (32) and the clock signal (CLK_OFF) of the second inverter clock extractor (31, 33), and to supply as output one of the clock signals (CLK) of the first and second clock extractors, which is selected by a selection signal (SEL) depending on the status of the modulation signal (MOD).

7. Transponder circuit (1) according to claim 6, **characterised in that** the double clock extractor unit comprises a RS type flip-flop (36), of which a first input (S) receives the modulation signal (MOD) and a second input (R) receives a combined signal supplied by an AND-type element, which receives as input the clock signal (CLK_OFF) of the second inverter clock extractor and an inverted signal of the modulation signal, wherein the flip-flop supplies as output the selection signal (SEL) to control the multiplexer, and **in that** the multiplexer supplies as output a clock signal (CLK) of the second clock extractor when the modulation signal (MOD) is in a second low status (OFF) with a clock signal produced by the second clock extractor in operation, wherein the multiplexer supplies as output the clock signal (CLK ON) of the first clock extractor when the modulation signal is in a first high status (ON).

8. Transponder circuit (1) according to one of the preceding claims, **characterised in that** a modulator part of the modulator rectifier block (2) comprises at least one switch (T3, T4) connected in series to at least one resistor (R1, R2), wherein said switch with the resistor are arranged in parallel with the antenna coil, and **in that** the switch is controlled by the modulation signal (MOD) to be conductive and to arrange the resistor directly in parallel with the antenna coil to reduce the amplitude of the alternating voltage of the signal picked up by the antenna coil, when the modulation signal is in a first high status, and to be non-conductive when the modulation signal is in a second low status.

9. Transponder circuit (1) according to claim 8, **characterised in that** the modulator part comprises two switches (T3, T4) and two resistors (R1, R2), **in that** a first switch, which is a MOS transistor (T3), is connected in series with a first resistor (R1) to be disposed between an earth defined as output of the modulator rectifier block (2) and a first terminal (B1) of the antenna coil (10), **in that** a second switch, which is a MOS transistor (T4), is connected in series with a second resistor (R2) to be disposed between the earth and a second terminal (B2) of the antenna coil, and **in that** a gale of each MOS transistor is controlled directly by the modulation signal (MOD).

## Patentansprüche

1. Transponderschaltung (1) mit einer Einheit (3) mit doppelter Taktextraktionseinrichtung,
wobei die Transponderschaltung umfasst:
eine Antennenspule (10), die mit einem Gleichrichter/Modulator-Block (2) verbunden ist, um auf der Grundlage eines von der Antennenspule eingefangenen Hochfrequenzsignals mit bestimmter Frequenz und ausreichender Amplitude eine gleichgerichtete Versorgungsspannung (V_{DD}) zu liefern,
wobei ein Anschluss (B1) der Antennenspule mit der Einheit (3) mit doppelter Taktextraktionseinrichtung verbunden ist, und
eine Steuerlogik (6), die ein Taktsignal (CLK) von der Einheit mit doppelter Taktextraktionseinrichtung empfängt und an den Gleichrichter/Modulator-Block ein Modulationssignal (MOD) liefert,
**dadurch gekennzeichnet, dass**
die Einheit mit doppelter Taktextraktionseinrichtung eine erste, empfindliche Taktextraktionseinrichtung (32) umfasst, die einen Umschaltschwellenwert hat, der kleiner als der Umschaltschwellenwert des Gleichrichterblocks ist, und eine zweite, invertierende Taktextraktionseinrichtung (31, 33) umfasst,
und dass das Modulationssignal (MOD) zu der Einheit mit doppelter Taktextraktionseinrichtung geliefert wird, um das von der ersten Taktextraktionseinrichtung erzeugte Taktsignal (CLK_ON) zu wählen, wenn das Modulationssignal in einem ersten hohen oder tiefen Zustand ist, oder um das von der zweiten Taktextraktionseinrichtung erzeugte Taktsignal (CLK_OFF) zu wählen, wenn das Modulationssignal in einem zum ersten Zustand entgegengesetzten zweiten Zustand ist.

2. Transponderschaltung (1) nach Anspruch 1, **dadurch gekennzeichnet, dass** die erste, empfindliche Taktextraktionseinrichtung (32) einen niedrigen Umschaltschwellenwert unterhalb eines Umschaltschwellenwerts des Gleichrichter/Modulator-Blocks (2) besitzt, um die Wechselspannung der Antennenspule (10) gleichzurichten, und dass die zweite, invertierende Taktextraktionseinrichtung (31, 33) einen hohen Umschaltschwellenwert besitzt, der gleich oder größer als der Schwellenwert des Gleichrichter/Modulator-Blocks ist.

3. Transponderschaltung (1) nach Anspruch 2, **dadurch gekennzeichnet, dass** die erste, empfindliche Taktextraktionseinrichtung einen Komparator (32) umfasst, wovon ein positiver Eingang mit einem der Anschlüsse (B1) der Antennenspule (10) verbunden ist und wovon ein negativer Eingang mit einer Referenzspannung (Vref), deren Wert kleiner als jener der Schwellenspannung des Gleichrichter/Modulator-Blocks ist und beispielsweise in der Größenordnung von 100 mV liegt, vorgespannt ist, wobei der Ausgang des Komparators das Taktsignal (CLK_ON) der ersten Taktextraktionseinrichtung liefert, und dass die zweite, invertierende Taktextraktionseinrichtung wenigstens einen ersten Inverter (31) umfasst, wovon der Eingang mit demselben Anschluss (B1) der Antennenspule wie die erste Taktextraktionseinrichtung verbunden ist.

4. Transponderschaltung (1) nach Anspruch 3, **dadurch gekennzeichnet, dass** die zweite, invertierende Taktextraktionseinrichtung einen zweiten Inverter (33) umfasst, der mit dem Ausgang des ersten Inverters (31) verbunden ist, um am Ausgang das Taktsignal der zweiten Taktextraktionseinrichtung (CLK_OFF) zu liefern.

5. Transponderschaltung (1) nach einem der vorhergehenden Ansprüche, **dadurch gekennzeichnet, dass** sie eine monostabile Kippschaltung (4) umfasst, die von der Einheit (3) mit doppelter Extraktionseinrichtung ein Taktsignal (CLK) empfängt und infolge eines Anhaltens des Taktsignals (CLK) ein Unterbrechungssignal (Tout) für das Hochfrequenzsignal zu der Steuerlogik (6) liefert.

6. Transponderschaltung (1) nach einem der vorhergehenden Ansprüche, **dadurch gekennzeichnet, dass** die Einheit (3) mit doppelter Extraktionseinrichtung einen Multiplexer (37) umfasst, um am Eingang das Taktsignal (CLK_ON) von der ersten, empfindlichen Taktextraktionseinrichtung (32) und das Taktsignal (CLK_OFF) von der zweiten, invertierenden Taktextraktionseinrichtung (31, 33) zu empfangen und um am Ausgang eines der Taktsignale (CLK) der ersten bzw. der zweiten Taktextraktionseinrichtung, das durch ein Auswahlsignal (SEL) in Abhängigkeit vom Zustand des Modulationssignals (MOD) gewählt wird, zu liefern.

7. Transponderschaltung (1) nach Anspruch 6, **dadurch gekennzeichnet, dass** die Einheit mit doppelter Extraktionseinrichtung eine bistabile Kippschaltung des RS-Typs (36) umfasst, wovon ein erster Eingang (S) das Modulationssignal (MOD) empfängt und ein zweiter Eingang (R) ein kombiniertes Signal empfängt, das von einem UND-Gatter geliefert wird, das am Eingang das Taktsignal (CLK_OFF) der zweiten, invertierenden Taktextraktionseinrichtung und ein invertiertes Signal des Modulationssignals empfängt, wobei die bistabile Kippschaltung am Ausgang das Auswahlsignal (SEL) liefert, um den Multiplexer zu steuern, und dass der Multiplexer am Ausgang ein Taktsignal (CLK) der zweiten Taktextraktionseinrichtung liefert, wenn das Modulationssignal (MOD) in einem zweiten, tiefen Zustand (OFF) ist, mit einem Taktsignal, das durch die zweite arbeitende Taktextraktionseinrichtung erzeugt wird, wobei der Multiplexer am Ausgang das Taktsignal (CLK_ON) der ersten Taktextraktionseinrichtung liefert, wenn das Modulationssignal in einem ersten hohen Zustand (ON) ist.

8. Transponderschaltung (1) nach einem der vorhergehenden Ansprüche, **dadurch gekennzeichnet, dass** ein Modulatorabschnitt des Gleichrichter/Modulator-Blocks (2) wenigstens einen Kommutator (T3, T4) enthält, der mit wenigstens einem Widerstand (R1, R2) in Reihe geschaltet ist, wobei der Kommutator zusammen mit dem Widerstand zu der Antennenspule parallel geschaltet ist, und dass der Kommutator durch das Modulationssignal (MOD) gesteuert wird, um durchzuschalten und um den Widerstand zu der Antennenspule direkt parallel zu schalten, um die Amplitude der Wechselspannung des von der Antennenspule eingefangenen Signals zu verringern, wenn das Modulationssignal in einem ersten, hohen Zustand ist, und um nicht durchzuschalten, wenn das Modulationssignal in einem zweiten, tiefen Zustand ist.

9. Transponderschaltung (1) nach Anspruch 8, **dadurch gekennzeichnet, dass** der Modulatorabschnitt zwei Kommutatoren (T3, T4) und zwei Widerstände (R1, R2) umfasst, dass ein erster Kommutator, der ein MOS-Transistor (T3) ist, mit einem ersten Widerstand (R1) in Reihe geschaltet ist, um zwischen eine definierte Masse am Ausgang des Gleichrichter/Modulator-Blocks (2) und einen ersten Anschluss (B1) der Antennenspule (10) geschaltet zu werden, dass ein zweiter Kommutator, der ein MOS-Transistor (T4) ist, mit einem zweiten Widerstand (R2) in Reihe geschaltet ist, um zwischen die Masse und einen zweiten Anschluss (B2) der Antennenspule geschaltet zu werden, und dass ein Gate jedes MOS-Transistors direkt durch das Modulationssignal (MOD) gesteuert wird.
